# EUROPÄISCHE PATENTSCHRIFT

(11) **EP 3 607 815 B1**
(45) Veröffentlichungstag und Bekanntmachung des Hinweises auf die Patenterteilung: **22.03.2023**
(21) Anmeldenummer: 18187809.1
(22) Anmeldetag: 07.08.2018
(51) Int. Cl.: A01D 89/00, A01B 63/111, A01D 78/10

(54) **LANDWIRTSCHAFTLICHES BEARBEITUNGSGERÄT**
AGRICULTURAL PROCESSING APPARATUS
APPAREIL DE TRAITEMENT AGRICOLE

(43) Veröffentlichungstag der Anmeldung: 12.02.2020
(73) Patentinhaber: Kverneland Group Kerteminde AS, 5300 Kerteminde (DK)
(72) Erfinder: EGELUND, Henrik, 5300 Kerteminde (DK); WALDEMAR, Peter, 5300 Kerteminde (DK)
(74) Vertreter: Grünecker Patent- und Rechtsanwälte PartG mbB

(56) Entgegenhaltungen:
- EP-A1- 1 208 738
- EP-A1- 1 813 142

## Beschreibung

Die Erfindung betrifft ein landwirtschaftliches Bearbeitungsgerät zum Einsatz bei der Futterernte sowie ein Verfahren zum Einstellen der Höhe der Zinkenenden eines landwirtschaftlichen Bearbeitungsgeräts, gemäß den Oberbegriffen der Ansprüche 1 und 9.

Aus der EP1813142 A1 ist bereits ein solches landwirtschaftliches Bearbeitungsgerät bekannt. Dieses Dokument beschreibt, dass Abstandssensoren ein Bodenrelief und eine Erntegutkontur erfassen können. Eine Höheneinstellung der Schwadrechen kann in Abhängigkeit des erfassten Bodenreliefs erfolgen.

Bei der Futterernte zur Erzeugung von Grünfutter kommt es zu unerwünschten Verunreinigungen. Insbesondere hat der Anteil an Asche und Erde im Futter eine negative Auswirkung auf den Energiegehalt des Tier-, zum Beispiel Kuhfutters.

Durchschnittlich kommt es etwa zu 80 bis 100 Gramm Asche pro Kilogramm Futter. Bereits eine Reduktion von 10 Gramm an Futter pro Kilogramm bedeutet einen Energieverlust, der etwa 100 Euro pro Kuh und Jahr entspricht. Aus diesem Grund gibt es starke Bemühungen, die Kontaminationen in der gesamten Produktionskette zu reduzieren. Landwirtschaftliche Bearbeitungsgeräte zur futterernte, wie insbesondere Heuer, Schwader, Mähwerke, Ladewagen oder Ballenpresse im großen Maße zu einer entsprechenden Verschmutzung bei.

Die zuvor genannten Bearbeitungsgeräte zur Futterernte weisen alle um eine Achse A umlaufende Zinken auf, die maßgeblich für die Verschmutzung verantwortlich sind. Bislang werden diese Zinken vom Landwirt auf eine vorbestimmte Höhe eingestellt, weisen also einen vorbestimmten Abstand zum Boden auf. Die Bodenbedingungen und die Stoppelhöhe ändern sich jedoch ständig, so dass Verunreinigungen unumgänglich sind.

Hiervon ausgehend liegt der Erfindung die Aufgabe zugrunde, ein landwirtschaftliches Bearbeitungsgerät sowie ein Verfahren bereit zu stellen, die ermöglichen, die Verunreinigung im Futter zu reduzieren und gleichzeitig wirtschaftlich und zuverlässig zu arbeiten.

Erfindungsgemäß wird diese Aufgabe durch die Merkmale der Ansprüche 1 und 9 gelöst.

Gemäß der vorliegenden Erfindung ist ein landwirtschaftliches Bearbeitungsgerät zum Einsatz bei der Futterernte mit um eine Achse A umlaufenden Zinken mit entsprechenden Zinkenenden vorgesehen, die eine Einrichtung zum Verändern des Abstands der Zinkenenden zum Boden aufweist. Ferner weist das Verarbeitungsgerät eine Sensoreinrichtung auf zum Messen der Stoppelhöhe auf dem Feld. Schließlich ist eine Auswerteeinheit in Form eines Entscheidungsunterstützungssystems (DSS) vorgesehen, dem die Sensoreinrichtung Messsignale für die Stoppelhöhe zuführen kann und die in Abhängigkeit der gemessenen Stoppelhöhe eine geeignete Position, insbesondere einen geeigneten Abstand der Zinkenenden zum Boden bzw. zur Stoppelspitze ermitteln kann. Eine Steuereinrichtung steuert die Einrichtung zum Verändern des Abstands der Zinkenenden an, um die Position, d.h. den ermittelten Abstand einzustellen und das Zinkenende in die bevorzugte Position zu bringen.

Es hat sich im Rahmen der vorliegenden Erfindung gezeigt, dass die Qualität, d.h. die Verschmutzung des Futters wesentlich davon abhängt, wie hoch die Stoppeln sind. Insbesondere hat sich herausgestellt, dass die ideale Position der Zinkenenden wesentlich von der Stoppelhöhe abhängt. Aber auch beispielsweise andere Ergebnisse, wie Futterverluste, bzw. Kapazität hängen maßgeblich davon ab, wo die Zinkenenden bei unterschiedlichen Stoppelhöhen angeordnet sind. Die erfindungsgemäße Sensoreinrichtung misst nun die Stoppelhöhe während der Bearbeitung und in Abhängigkeit dieser Messwerte kann eine Auswerteeinheit dann die korrekte Position der Zinkenenden bestimmen, die dann eingestellt werden kann.

Mit der vorliegenden Erfindung kann die Verschmutzung durch Erde und Asche wesentlich reduziert werden, da stets eine korrekte Position der Rechenzinken eingestellt werden kann.

Ein sogenanntes Entscheidungsunterstützungssystem (DSS) kann zugeführte Informationen aufbereiten und gezielt auswerten. Dazu gehören Funktionen z.B. wie Filtern von Daten, d.h. hier Parametern und/oder Gewichten von Daten, d.h. Parameter. Das System verfügt z.B. über Auswertungsmöglichkeiten wie das Bilden von Summen oder Durchschnittsberechnungen, Vergleiche etc. Weiter ermöglicht ein entsprechendes System z. B. die Verknüpfung von Daten bzw. Parametern mit Optimierungsalgorithmen. Wesentlich ist jedoch, dass gemäß der Erfindung nun erkannt wurde, dass die optimale Position der Zinkenenden maßgeblich abhängt von der Stoppelhöhe und somit während des Bearbeitungsprozesses variiert.

So kann das Entscheidungsunterstützungssystem mittels Algorithmus einen optimierten Abstand der Zinkenenden bestimmen.

Das Entscheidungsunterstützungssystem kann in Abhängigkeit mehrerer Parameter den Abstand der Zinkenenden bestimmen, das heißt, dass in die Berechnung auch weitere Parameter wie z.B. Feuchtigkeit und /oder Stoppeltyp und / oder Ertrag pro Fläche, das heißt der Ertrag der pro Fläche (Masse pro Fläche - bzw. ein proportionaler Wert) der angenommen wird oder aber z.B. über optische Sensoren und/oder Sensoren zur Ermittlung der Auslastung des Antriebsstrangs z.B. Drehmomentsensoren, ermittelt wird. Unter Feuchtigkeit versteht man hier die Feuchtigkeit der Stoppel oder aber auch die Luftfeuchtigkeit in einem Bereich der Stoppel.

Dazu weist das landwirtschaftliche Bearbeitungsgerät z.B. zusätzlich mindestens eine weitere Messeinrichtung für Parameter auf, wobei die jeweilige Messeinrichtung dann ebenfalls mit dem Entscheidungsunterstützungssystem verbunden ist.

Zusätzlich oder alternativ kann auch eine Eingabeeinrichtung vorgesehen sein zum Eingeben eines oder mehrerer Parameter, die an das Entscheidungsunterstützungssystem geleitet werden, so dass beispielsweise Parameter wie Stoppeltyp etc. eingegeben werden können.

Vorzugsweise weist das Bearbeitungsgerät eine Einrichtung zum Messen der Feuchtigkeit auf, insbesondere zum Messen der Feuchtigkeit der Stoppel oder der Luftfeuchtigkeit im Bereich der Stoppel. Eine solche Einrichtung zum Messen der Feuchtigkeit ist beispielsweise Feuchtigkeitssensor. Zur Berechnung des optimalen Abstands der Zinkenenden kann das Entscheidungsunterstützungssystem auch noch unterschiedliche Betriebsstrategien zugrunde legen, die in dem Entscheidungsunterstützungssystem abgelegt sein können und empirisch ermittelt oder berechnet wurden. Dabei kann mindestens eine der folgenden Betriebsstrategien herangezogen werden:
- Abstand der Zinkenenden von den Stoppelspitzen in Abhängigkeit der Stoppelhöhe bei maximaler Kapazität. Unter maximaler "Kapazität" versteht man hier die maximal mögliche Leistung des Geräts, insbesondere die Arbeitsgeschwindigkeit, d.h. die Drehzahl der Zinken bzw. die Transportgeschwindigkeit. Für eine hohe Kapazität ist es beispielsweise förderlich, die Zinkenenden mit kleinem Abstand zu den Stoppelspitzen unterhalb der Stoppelspitzen anzuordnen.

Eine weitere Betriebsstrategie ist - der Abstand der Zinkenenden von den Stoppelspitzen in Abhängigkeit der Stoppelhöhe bei minimalem Verlust an Futter. Bei dieser Betriebsstrategie sollten die Zinkenenden so tief wie möglich in Bezug auf den Boden angeordnet sein, um den gesamten Schnitt aufzuhäufen oder aufzunehmen - was wiederum jedoch einen negativen Einfluss auf die Kapazität und Verschmutzung aufweist.

Eine weitere Betriebsstrategie ist beispielsweise - der Abstand der Zinkenenden von den Stoppelspitzen in Abhängigkeit der Stoppelhöhe bei maximaler Qualität, insbesondere minimaler Verschmutzung des Futters. Bei einer hohen Qualität und geringen Verschmutzung sollten Zinkenenden möglichst in großem Abstand zum Boden positioniert werden, um zu verhindern, dass die Zinkenenden den Boden berühren - was sich jedoch wiederum nachteilig auf den Verlust auswirkt.

Der Landwirt kann nun Prioritäten setzen und eine entsprechende Eingabe machen und eine Strategie auswählen oder unterschiedlich gewichten oder aber das Entscheidungsunterstützungssystem ermittelt auf der Grundlage unterschiedlicher Betriebsstrategien einen für unterschiedliche Strategien passenden Kompromissbereich für eine Stoppelhöhe und ermittelt dann eine passende Position der Zinkenenden. Beispielsweise kann das System für verschiedene Betriebsstrategien eine Position der Zinkenenden ermittelt werden, wobei dann beispielsweise ein Mittelwert aus den Zinkenendenpositionen der verschiedenen Betriebsstrategien gebildet wird, oder aber bestimmte Betriebsstrategien können besonders gewichtet werden. Auch können zusätzliche Parameter den Abstand noch beeinflussen.

Die Erfindung ist insbesondere geeignet für landwirtschaftliche Bearbeitungsgeräte, wie Heuer, Schwader, Ladewagen mit Pick-up-Walze oder Ballenpresse mit Pick-up-Walze, die alle um eine Achse A umlaufende Zinken aufweisen und maßgeblich für die Verschmutzung mit Asche und Erde verantwortlich sind.

Heuer und Schwader weisen beispielsweise ein um eine Achse A rotierendes Rotorgehäuse auf, von dem die Zinken angetrieben werden, wobei die Einrichtung zum Verändern des Abstands der Zinkenenden zum Boden die Position des Rotorgehäuses entlang der Achse A verändert. Zusätzlich kann beispielsweise eine Kurvenbahn, die in dem Rotorgehäuse angeordnet ist, innerhalb des Rotorgehäuses mittels Antrieb höhenverstellbar sein. Über eine solche Kurvenbahn in dem Rotorgehäuse kann ein Schwenkwinkel der Rechenzinken um die Längsachse des jeweiligen Zinkenarms in Abhängigkeit der Umlaufposition des Zinkenarms gesteuert werden. Durch Verstellen der Höhe der Kurvenbahn kann maßgeblich Einfluss darauf genommen werden, um welchen Winkel das untere Ende des Zinkens verschwenkt wird, derart, dass sich auch die Höhe des Zinkenendes zum Boden zusätzlich verstellen kann.

Die Zinken, die sich von der Pick-up-Walze einer Ballenpresse oder eines Ladewagens nach außen erstrecken, rotieren um eine Achse A, wobei die Einrichtung zum Verändern des Abstands der Zinkenenden zum Boden die Höhe der Achse A relativ zum Boden ändert.

Die Sensoreinrichtung zum Messen der Stoppelhöhe weist mindestens einen Abstandssensor auf, derart, dass insbesondere der Abstand zur Stoppelspitze und der Abstand zum Boden gemessen werden kann und aus der Differenz die Stoppelhöhe bestimmt werden kann.

Die Sensoreinrichtung zum Messen der Stoppelhöhe kann beispielsweise mindestens einen Sensor folgender Gruppe umfassen: optischer Sensor, Ultraschallsensor, Radarsensor, Mikrowellensensor, Winkelsensor, insbesondere mittels Laser Triangulation.

Bei dem erfindungsgemäßen Verfahren zum Einstellen der Höhe der Zinkenenden eines landwirtschaftlichen Bearbeitungsgeräts werden folgende Schritte durchgeführt:
Messen der Stoppelhöhe, Leiten der Messwerte an eine Auswerteeinheit in Form eines Entscheidungsunterstützungssystems zum Ermitteln einer geeigneten Position, insbesondere eines geeigneten Abstands der Zinkenenden zum Boden bzw. zur Stoppelspitze in Abhängigkeit der gemessenen Stoppelhöhe, - Einstellen des ermittelten Abstands der Zinkenenden.

Gemäß der vorliegenden Erfindung können die Stoppelhöhemessung und das Einstellen des Abstands kontinuierlich erfolgen. Somit ist auch bei veränderlichen Bedingungen stets eine ideale Einstellung der Position der Zinkenenden möglich.

Das Entscheidungsunterstützungssystem bestimmt in Abhängigkeit mehrerer Parameter den Abstand der Zinkenenden, insbesondere auf der Grundlage der Feuchtigkeit und/oder des Stoppeltyps und/oder des Ertrags pro Fläche. Ferner kann das Entscheidungsunterstützungssystem den Abstand der Zinkenenden zusätzlich auf der Grundlage von mindestens einer Betriebsstrategie bestimmen, wie zuvor näher erläutert wurde.

Wenn sich der Abstand der Zinkenenden während eines Umlaufs um die Achse A ändert, wird ein bestimmter Abstand in der Arbeitsposition der Zinken zugrunde gelegt, der dann entsprechend angepasst wird.

Es ist vorteilhaft, wenn die Zinkenenden derart in Abhängigkeit der Stoppelhöhe verstellt werden, dass der Abstand von der Stoppelspitze zur Zinkenspitze in einem Bereich von 10 - 50%, insbesondere 15-30% der Stoppelhöhe liegt.

Die vorliegende Erfindung wird nachfolgend unter Bezugnahme folgender Figuren näher erläutert.
- Fig. 1: zeigt grob schematisch ein landwirtschaftliches Bearbeitungsgerät in Form eines Schwaders gemäß der vorliegenden Erfindung.
- Fig. 2: zeigt grob schematisch die wesentlichen Komponenten gemäß einem Ausführungsbeispiel der vorliegenden Erfindung.
- Fig. 3A: zeigt einen Graphen, bei dem die Zinkenendenpositionen in Abhängigkeit der Stoppelhöhe bei unterschiedlichen Bearbeitungsstrategien dargestellt ist
- Fig. 3B: zeigt die Stoppelhöhe sowie die entsprechende Zinkenendenposition
- Fig. 4A: zeigt grob schematisch eine Seitenansicht einer Pick-up-Walze gemäß der vorliegenden Erfindung
- Fig. 4B: zeigt grob schematisch die Vorderansicht der in Fig. 4A gezeigten Pick-up-Walze
- Fig. 5: zeigt grob schematisch eine Kurvenbahn zum Führen eines Zinkenhebels gemäß der vorliegenden Erfindung

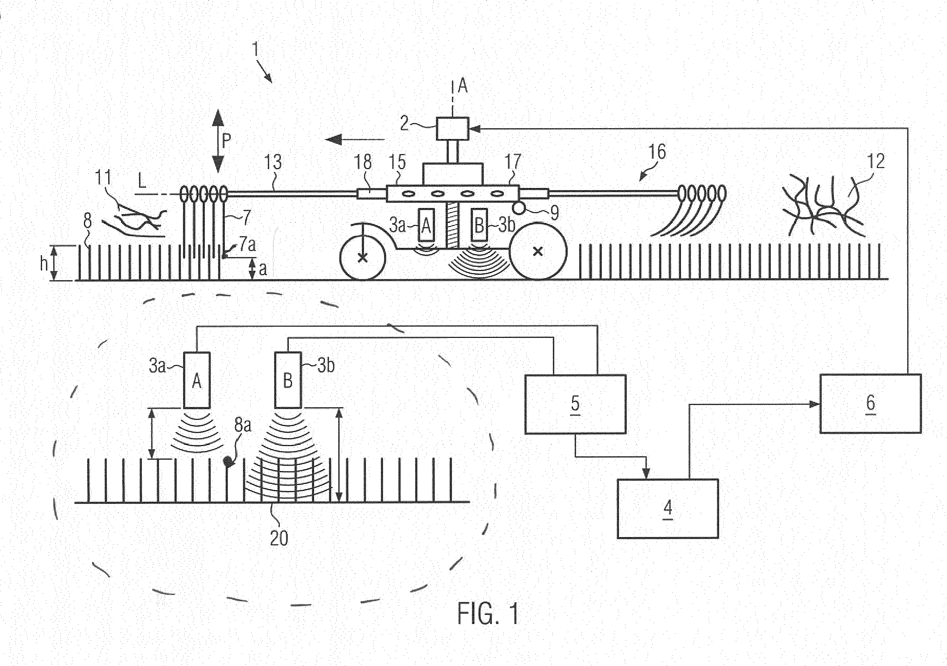

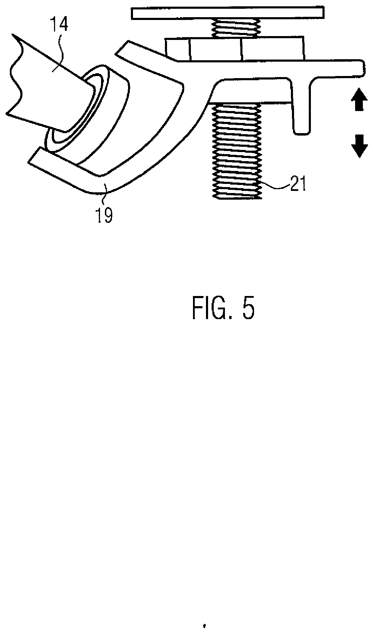

Fig. 1 zeigt grob schematisch ein landwirtschaftliches Bearbeitungsgerät 1 zum Einsatz bei der Futterernte in Form eines Schwaders 1. Der Schwader 1 weist einen Rechenkreisel 16 auf, der an einem Tragarm befestigt ist. Der Schwader weist ein Rotorgehäuse 17 auf, das drehbar um die Rotorachse A gelagert ist und in bekannter Weise von einem Getriebe, z.B. einem Kegelradgetriebe, das in einem entsprechenden Getriebegehäuse gelagert ist, umlaufend angetrieben wird. In um den Umfang gleichmäßig verteilten Öffnungen 18 des Rotorgehäuses 17 sind Zinkenarme 13 gelagert und werden vom Rotorgehäuse 17 angetrieben. An den Zinkenarmen 13 sind winkelig die Rechenzinken 7 angeordnet. Am anderen Ende der Zinkenarme 13 sind beispielsweise winkelig Hebel 14 angeordnet, insbesondere Rollenhebel 14 (siehe Fig. 5), die in einer Kurvenbahn 19 umlaufen. Der Schwenkwinkel um die Längsachse L des Zinkenarms 13 kann während des Umlaufs um eine Achse A geändert werden, d.h., dass die Zinken 7 in eine Arbeitsstellung (siehe links der Fig. 1) verschwenkt werden können, d.h. eine Stellung, in der die Rechenzinken nach unten Richtung Boden verschwenkt sind und in eine Position, in der die Zinken nach oben verschwenkt sind (siehe rechte Seite der Fig. 1). Bei einem Umlauf der Zinkenarme 13 um die Achse A befinden sich die Rechenzinken etwa 36 bis 41 % ihrer Umlaufbahn in der Arbeitsstellung. Wie aus Fig. 1 hervorgeht, erzeugt der Schwader einen Schwad 12 aus dem Schnittgut 11, das auf den Stoppeln 8 aufliegt.

Der Abstand a der Zinkenenden 7a vom Boden 20 ist einstellbar. Dazu kann beispielsweise die Höhe des Rotorgehäuses 17 mittels Antrieb höhenverstellt werden, beispielsweise durch eine Höhenverstellspindel, die im Getriebegehäuse doppelseitig axial gelagert wird und die Fahrwerksachse axial über das Spindelgewinde abstützt. Alternativ kann auch eine Einrichtung 2 aus einem Hydraulikzylinder vorgesehen sein.

Der erfindungsgemäße Schwader 1 weist weiter eine Sensoreinrichtung 3a,b auf, zum Messen der Stoppelhöhe h der Stoppeln 8. Insbesondere ist die Sensoreinrichtung derart ausgebildet, dass sie mindestens einen Abstandsensor umfasst. Bei diesem konkreten Ausführungsbeispiel sind zwei Abstandssensoren 3a, 3b vorgesehen, die am Schwader angeordnet sind und jeweils den Abstand zur Stoppelspitze 8a und den Abstand zum Boden 20 messen. Durch Subtraktion des Abstands zur Stoppelspitze 8a von dem Abstand zum Boden 20 ergibt sich die Stoppelhöhe h. Eine entsprechende Berechnung kann in der Berechnungseinrichtung 5 durchgeführt werden.

Die Sensoren 3a,3b sind in Fig. 1 unterhalb des Kreisels, bzw. Rotors angeordnet, können aber auch z.b. über, unter oder hinter dem Kreisel angeordnet sein. Im Fall, dass sich die Sensoren 3a,b oberhalb des Kreisels befinden, würde dann erst ab einer bestimmten Höhe angefangen werden zu messen, also ein Abstand festgelegt werden, so dass die Zinkenarme bei der Messung nicht störend wären, weil erst unterhalb die Messung beginnt, bzw. Messwerte, die die rotierenden Zinkenarme betreffen bei der Auswertung ausgeblendet bzw. subtrahiert werden.

Die Qualität, d.h. die Verschmutzung des Futters bzw. des Schnittguts, hängt wesentlich von der Position der Zinkenenden ab und davon, wie hoch die Stoppeln 8 sind. Insbesondere ist die ideale Position der Zinkenenden 7a wesentlich von der Stoppelhöhe h abhängig. Aus diesem Grund wird gemäß der vorliegenden Erfindung durch eine Auswerteeinheit 4 die optimale Position der Zinkenenden 7a in Abhängigkeit der Stoppelhöhe h bestimmt. Die Auswerteeinheit 4 bestimmt also einen geeigneten Abstand der Zinkenenden 7a zum Boden 20 bzw. zur Stoppelspitze 8a und leitet ein entsprechendes Signal an die Steuereinrichtung 6, die daraufhin als Stellglied die Einrichtung 2 zum Verändern des Abstands der Zinkenenden zum Boden ansteuert. Hier verstellt die Einrichtung 2 die Höhe des Rotorgehäuses 17, wie durch den Pfeil P dargestellt ist. Da während des Umlaufs der Zinken um die Achse A sich der Abstand der Zinkenenden 7a ohnehin verändert, wird ein Abstand an einer bestimmten Stelle, insbesondere in einer Arbeitsposition, zugrunde gelegt. Somit kann durch Überwachen der Stoppelhöhe h kontinuierlich die Rotorhöhe und somit die korrekte Position der Zinkenenden 7a eingestellt werden, auch wenn sich die Stoppelhöhe ändert. Dadurch kann die Verschmutzung durch Erde und Asche wesentlich reduziert werden, da stets eine korrekte Position der Rechenzinken eingestellt werden kann.

Durch die Auswerteeinheit, die insbesondere als Entscheidungsunterstützungssystem 4 ausgebildet ist, wird ermöglicht, dass das Bearbeitungsgerät gleichzeitig wirtschaftlich und zuverlässig arbeiten kann. Dazu ist vorzugsweise die Auswerteeinheit als Entscheidungsunterstützungssystem 4 ausgebildet. Sogenannte Entscheidungsunterstützungssysteme (DSS) können zugeführte Informationen aufbereiten und gezielt auswerten. Dazu gehören Funktionen wie z.B. Filtern von Daten bzw. Parametern und/oder Gewichten von Daten bzw. Parametern. Das System verfügt z.B. auch über Auswertemöglichkeiten, wie das Bilden von Summen oder Durchschnittsberechnungen, Vergleiche etc. Weiter ermöglicht ein entsprechendes System z.B. die Verknüpfung von Daten bzw. Parametern mit Optimierungsalgorithmen so dass z.B. auf der Grundlage mehrerer Parameter ein optimales Ergebnis für die Zinkenendenposition ermittelt werden kann. So kann beispielsweise das Entscheidungsunterstützungssystem 4 der Auswertung zusätzlich zur Stoppelhöhe noch mindestens einen weiteren Parameter zugrunde legen.

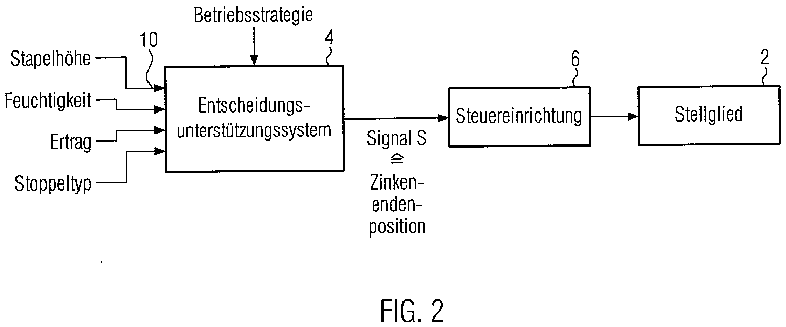

Wie insbesondere aus Fig. 2 hervorgeht, kann beispielsweise als weiterer Parameter bzw. Messwert die Feuchtigkeit dem Entscheidungsunterstützungssystem 4 zugeführt werden. Dabei kann die Feuchtigkeit über ein weiteres Messsystem 9 direkt am Schwader 9 gemessen werden. Dazu ist beispielsweise ein .Feuchtigkeitssensor vorgesehen, der die Feuchtigkeit des Schnittguts oder aber die Luftfeuchtigkeit im Bereich der Stoppeln 8 messen kann. Als weiterer Parameter kann der Stoppeltyp eingegeben werden, beispielsweise Gras, Luzerne oder Ackerfutter. Schließlich kann als Parameter der Ertrag eingegeben oder der Ertrag oder ein dazu proportionaler Wert ermittelt werden, der der zu bearbeiteten Masse pro Fläche entspricht. Dieser Wert wird wie folgt ermittelt: beispielsweise mit einem optischen Sensor und/oder einem oder mehrerer Sensoren zur Ermittlung der Auslastung des Antriebsstrangs, z.B. Drehmomentsensor. Für Parameter, die nicht direkt gemessen werden, beispielsweise den Stoppeltyp, kann eine Eingabeeinrichtung 10 vorgesehen sein zum Eingeben eines oder mehrerer Parameter, die an das Entscheidungsunterstützungssystem 4 weitergeleitet werden. Das Entscheidungsunterstützungssystem berücksichtigt dann bei der Auswertung auch noch diese Parameter und passt den Abstand a entsprechend an.

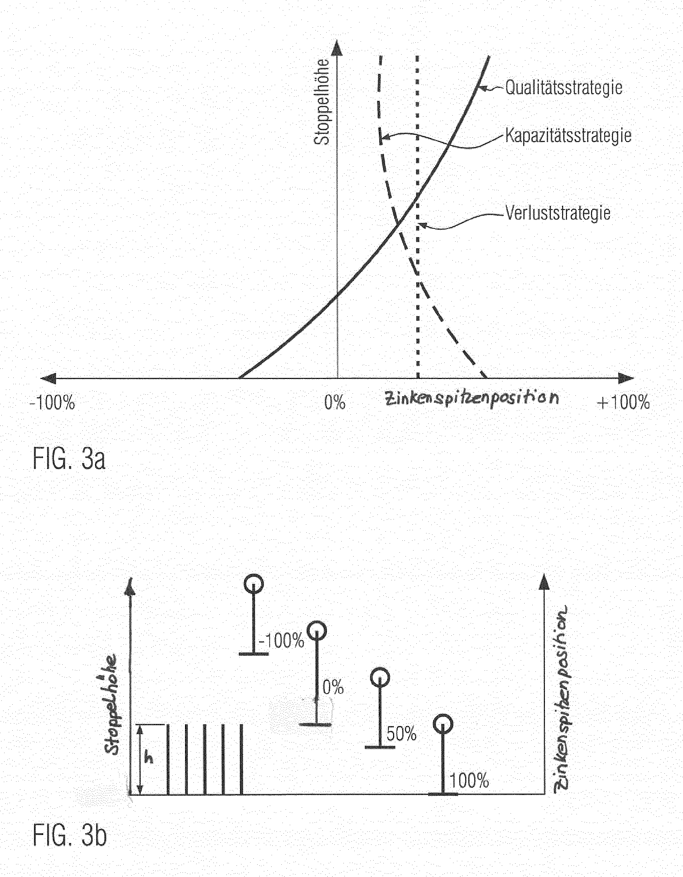

Zusätzlich zu der Berechnung des optimalen Abstands a der Zinkenenden 7a kann das Entscheidungsunterstützungssystem 4 auch noch unterschiedliche Betriebsstrategien zugrunde legen, die in dem Entscheidungsunterstützungssystem abgelegt sein können und vorab empirisch ermittelt wurden oder aber berechnet wurden. Fig. 3A zeigt entsprechende Betriebsstrategien. In dem in Fig. 3A gezeigten Graphen ist die Position der Zinkenenden 8a in Abhängigkeit der Stoppelhöhe aufgetragen. 0 % bedeutet, dass das Zinkenende auf Höhe der Stoppelspitze 8a ist. +100 % bedeutet, dass das Zinkenende 7a in Kontakt mit dem Boden 20 ist und -100 % bedeutet eine entsprechende Bewegung ( die betragsmäßig 100% entspricht) ausgehend von der Stoppelspitze 8a nach oben, wie in Fig. 3B dargestellt ist.

Die durchgezogene Kurve in Fig. 3A stellt eine Qualitätsstrategie dar. Das bedeutet, dass hier der Abstand der Zinkenenden von der Stoppelspitze in Abhängigkeit der Stoppelhöhe bei maximaler Qualität, d.h. bei minimaler Verschmutzung des Futters bzw. Schnittguts, aufgetragen ist. Wie aus Fig. 3A hervorgeht, ist vorzugsweise bei sehr niedriger Stoppelhöhe der Abstand zur Stoppelspitze groß, d.h., dass das jeweilige Zinkenende 7a vorzugsweise über der Stoppelspitze 8a liegt. Mit steigender Stoppelhöhe kann dann auch das Zinkenende 7b in seiner optimalen Position relativ zu dem Stoppel nach unten verändert werden, bis etwa zur halben Stoppelhöhe (50%). Um die Verschmutzung zu minimieren, sollten also die Zinkenenden möglichst in großem Abstand zum Boden positioniert werden, um zu verhindern, dass die Zinkenenden den Boden berühren - was sich jedoch wiederum nachteilig auf den Verlust auswirkt, da dann nicht sichergestellt wird, dass beispielsweise das gesamte Schnittgut aufgenommen und bewegt werden kann, sondern Schnittgut liegen bleibt.

Die gepunktete Linie in Fig. 3A zeigt die Verluststrategie, d.h. Abstand der Zinkenenden von den Stoppelspitzen in Abhängigkeit der Stoppelhöhe bei minimalem Verlust, d.h., dass eine minimale Menge an Schnittgut auf dem Boden liegenbleibt und beispielsweise nicht zu einem Schwad gehäuft wird oder von den Pick-up-Walzen aufgenommen wird. Bei dieser Betriebsstrategie sollen die Zinkenenden so tief in Bezug auf den Boden angeordnet sein, dass der gesamte Schnitt aufgehäuft oder aufgenommen werden kann - was wiederum jedoch einen negativen Einfluss auf die Kapazität und die Verschmutzung mit sich bringt. Wie in Fig. 3A dargestellt ist, liegt hier die Zinkenendenposition in einem konstanten Bereich von etwa 15-30 % insbesondere +20 %, d.h. 20 % tiefer als die Stoppelspitze in Bezug auf die Stoppelhöhe.

Die gestrichelte Linie zeigt die Kapazitätsstrategie an, d.h. den Abstand der Zinkenenden von den Stoppelspitzen bei maximaler Kapazität, d.h. hier bei maximal möglicher Leistung des Geräts, insbesondere bei maximaler Arbeitsgeschwindigkeit, d.h. maximal möglicher Drehzahl der Zinken und maximaler dazu geeigneter Transportgeschwindigkeit. Wie aus Fig. 3A hervorgeht, kann mit sinkender Stoppelhöhe der Abstand der Zinken zum Boden 20 verringert werden bzw. kann mit abnehmender Stoppelhöhe der Abstand zur Stoppelspitze zunehmen, hier z.B. auf etwa 50 % von der Stoppelspitze nach unten verfahren werden.

Der Landwirt kann entweder aus einer Strategie auswählen und dieser den Vorrang geben oder aber das Entscheidungsunterstützungssystem 4 berechnet aus den unterschiedlichen Strategien für eine Stoppelhöhe einen passenden Bereich bzw. einen passenden Abstand a. Beispielsweise kann das System für verschiedene Betriebsstrategien eine Position der Zinkenenden ermitteln, wobei dann beispielsweise der Mittelwert aus den Abständen für die unterschiedlichen Strategien gebildet wird, wobei es möglich ist, dass die unterschiedlichen Strategien unterschiedlich gewichtet werden. Dieser Abstand kann dann noch durch zusätzliche Parameter, beispielsweise die die zuvor genannt wurden, beeinflusst werden. Dadurch, dass über die Sensoreinrichtung die Stoppelhöhe kontinuierlich gemessen werden kann, kann der ideale Abstand a kontinuierlich eingestellt werden. Bei einer hohen Feuchtigkeit kann der Abstand dahingehend korrigiert werden, dass die Zinkenenden weiter nach unten verfahren werden. Bei unterschiedlichen Stoppeltypen, wie beispielsweise Gras, Luzerne oder Ackerfutter, kann der Abstand a entsprechend korrigiert werden, indem für Luzerne die Zinken weiter nach oben verstellt werden als für Ackerfutter. Bei leichtem Futter sind die Zinkenenden weiter oben positioniert als bei schwerem Futter. Bei hohem Ertrag werden die Rechenzinken weiter nach unten bewegt als bei niedrigem Ertrag.

Die Sensoreinrichtung zum Messen der Stoppelhöhe kann mindestens einen Sensor folgender Gruppe umfassen: Ultraschallsensor, Radarsensor, Mikrowellensensor, etc.

Bei dem in Fig. 1 gezeigten Ausführungsbeispiel wird die Höhe des Rotorgehäuses 17 zum Einstellen der Position der Zinkenenden 7a eingestellt. Zusätzlich kann auch noch die zuvor beschriebene Kurvenbahn, wie aus Fig. 5 hervorgeht, höhenverstellt werden. Indem beispielsweise eine Spindel 21 eines Spindelmotors verstellt wird, kann die Kurvenbahn 19 ebenfalls im Rotorgehäuse verstellt werden. Durch die Höhenverstellung bewegt sich auch der Hebel 14, wobei sich dadurch der Zinkenarm 13 um seine Längsachse L dreht, derart, dass der Schwenkwinkel der Zinken 7 verändert wird und somit sich auch der Abstand zum Boden 20 ändert. Somit wird bei diesem Ausführungsbeispiel sowohl die Einrichtung 2 zum Ändern der Höhe des Rotorgehäuses 17 von der Steuereinrichtung 6 angesteuert, als auch ein Antrieb für die Kurvenbahn 19, wobei sich die tatsächliche Position des Zinkenendes 7a aus der Summe der Bewegung beider Einrichtungen ergibt.

Es hat sich als besonders vorteilhaft herausgestellt, wenn die Zinkenenden derart in Abhängigkeit der Stoppelhöhe verstellt werden, dass der Abstand von der Stoppelspitze 8a zur Zinkenspitze in einem Bereich von 10-50%, insbesondere 15-30% der Stoppelhöhe liegt.

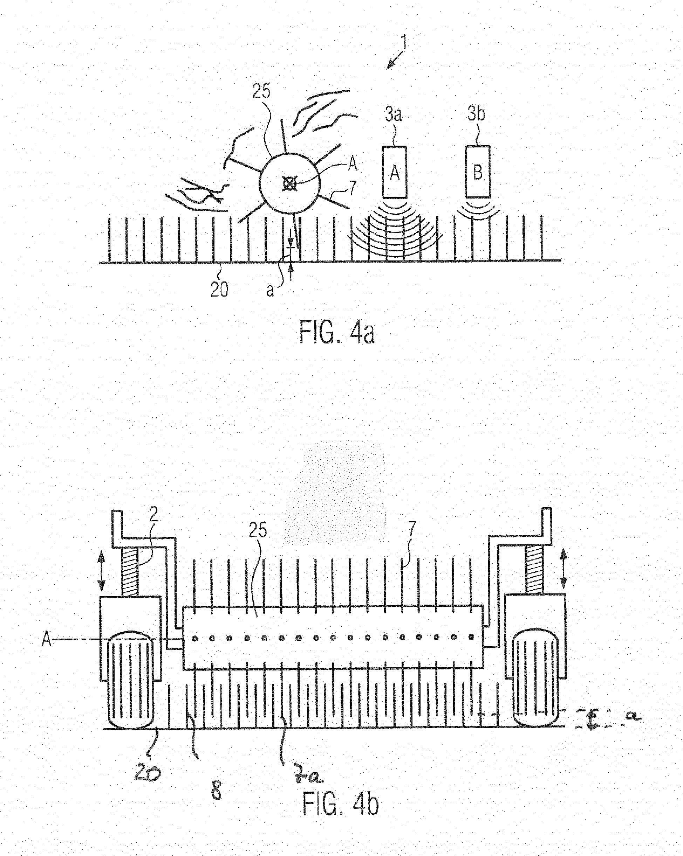

Fig. 4A und 4B zeigen grob schematisch ein weiteres Ausführungsbeispiel gemäß der vorliegenden Erfindung, das im Wesentlichen dem ersten Ausführungsbeispiel entspricht, wobei hier jedoch eine Pick-up-Walze mit umlaufenden Zinken 7 zum Einsatz kommt. Hier drehen sich die Zinken 7 ebenfalls um die Achse A, die hier jedoch im Wesentlich horizontal ausgerichtet ist. Ebenso wie bei dem vorherigen Ausführungsbeispiel kann die Auswerteeinheit 4, insbesondere das Entscheidungsunterstützungssystem 4, den idealen Abstand a zum Boden 20 ermitteln und dann die Einrichtung 2 zum Verändern des Abstands der Zinkenenden zum Boden 20 bzw. zu den Stoppelspitzen über die Steuereinrichtung 6 ansteuern. Die Einrichtung 2 zum Verändern des Abstands ist hier beispielsweise ein Hydraulikzylinder, der die Welle bzw. Achse Ader Pick-up-Walze 25 in ihrer Höhe verändert.

Bei dem erfindungsgemäßen Verfahren können vorab unterschiedliche Betriebsstrategien in ein Entscheidungsunterstützungssystem 4 einprogrammiert werden, wie in Fig. 3A dargestellt ist. Außerdem können weitere Parameter beispielsweise vom Landwirt über eine Eingabeeinrichtung 10 (siehe Fig. 2) eingegeben werden. Ferner kann die Stoppelhöhe während des Betriebs über die Messeinrichtung 3a, 3b gemessen und gegebenenfalls über die Berechnungseinrichtung 5 berechnet werden. Es kann aber auch noch mindestens eine weitere Messvorrichtung 9 vorgesehen sein, beispielsweise zum Messen der Feuchtigkeit, wobei entsprechende Messwerte ebenfalls in das Entscheidungsunterstützungssystem 4 eingespeist werden. Die Messung der Stoppelhöhe und gegebenenfalls auch die Messung weiterer Messwerte oder Parameter kann kontinuierlich erfolgen, sodass das Entscheidungsunterstützungssystem 4 kontinuierlich eine geeignete Position der Zinkenenden 7a ermitteln kann und ein entsprechendes Signal an die Steuerung 6 leiten kann, die wiederum die Einrichtung 2 zum Verändern des Abstands der Zinkenenden zum Boden ansteuert, um z.B. das Rotorgehäuse 15 anzuheben oder abzusenken oder aber die Welle bzw. Achse A der Pick-up-Walze. Somit ermöglicht die Erfindung einerseits Verunreinigungen im Futter zu reduzieren, aber gleichzeitig eine wirtschaftliche und zuverlässige Betriebsweise.

Auch wenn diese hier nicht im Detail genannt werden können, können zur Ermittlung der geeigneten Position noch weitere Parameter berücksichtigt werden.

Gemäß einer bevorzugten Ausführungsform werden die zur Ermittlung der Position der Zinkenspitzen herangezogenen Parameter, insbesondere die Messparameter, an ein mobiles Gerät, zum Beispiel z.B. ein Handy, Tablet übertragen, zum Beispiel z.B. via Bluetooth oder WLAN.

Sämtliche gemessene oder eingegebene Parameter können auch an externe Programme zur Weiterverarbeitung übertragbar sein und dann zum Beispiel georeferenziert also inkl. GPS Daten zur Ertragskartierung verwendet werden.

## Patentansprüche

1. Landwirtschaftliches Bearbeitungsgerät (1) zum Einsatz bei der Futterernte, mit um eine Achse (A) umlaufende Zinken (7) mit entsprechenden Zinkenenden (7a),
einer Einrichtung (2) zum Verändern des Abstands (a) der Zinkenenden (7a) zum Boden (20), **gekennzeichnet durch**
eine Sensoreinrichtung (3a, 3b) zum Messen einer Stoppelhöhe (h),
eine Auswerteeinheit (4), in Form eines Entscheidungsunterstützungssystems (4), dem die Sensoreinrichtung (3 a, b) Messsignale für die Stoppelhöhe zuführt, und die in Abhängigkeit der gemessenen Stoppelhöhe eine geeignete Position der Zinkenenden, insbesondere den Abstand der Zinkenenden zum Boden bzw. zur Stoppelspitze (8a), ermitteln kann und
eine Steuereinrichtung (6), die die Einrichtung (2) zum Verändern des Abstands der Zinkenenden (7a) ansteuert, um die ermittelte Position einzustellen.

2. Landwirtschaftliches Bearbeitungsgerät nach Anspruch 1, **dadurch gekennzeichnet, dass** das Entscheidungsunterstützungssystem (4) mittels Algorithmus den Abstand der Zinkenenden bestimmen kann.

3. Landwirtschaftliches Bearbeitungsgerät nach mindestens einem der Ansprüche 1 oder 2, **dadurch gekennzeichnet, dass** das Entscheidungsunterstützungssystem (4) in Abhängigkeit mehrerer Parameter den Abstand der Zinkenenden bestimmen kann, insbesondere Feuchtigkeit und/oder Stoppeltyp und/oder Ertrag pro Fläche.

4. Landwirtschaftliches Bearbeitungsgerät nach mindestens einem der Ansprüche 1 bis 3, **dadurch gekennzeichnet, dass** das landwirtschaftliche Bearbeitungsgerät (1) mindestens eine zusätzliche Messeinrichtung (9) für Parameter aufweist, wobei die jeweilige Messeinrichtung mit dem Entscheidungsunterstützungssystem (4) verbunden ist und/oder weiter eine Eingabeeinrichtung (10) vorgesehen ist zum Eingeben eines oder mehrerer Parameter, wobei das Bearbeitungsgerät (1) vorzugsweise eine Einrichtung zum Messen der Feuchtigkeit, insbesondere der Feuchtigkeit der Stoppeln oder Luftfeuchtigkeit im Bereich der Stoppeln aufweist.

5. Landwirtschaftliches Bearbeitungsgerät (1) nach mindestens einem der Ansprüche 1 bis 4, **dadurch gekennzeichnet, dass** das Entscheidungsunterstützungssystem (4) den Abstand der Zinkenenden zusätzlich auf der Grundlage von mindestens einer Betriebsstrategie bestimmt, die in dem Entscheidungsunterstützungssystem (4) abgelegt ist, wobei insbesondere mindestens eine der folgenden Bearbeitungsstrategien herangezogen werden kann:
Abstand der Zinkenenden (7a) von den Stoppelspitzen (8a) in Abhängigkeit der Stoppelhöhe bei maximaler Kapazität und/oder
Abstand der Zinkenenden (7a) von den Stoppelspitzen (8a) in Abhängigkeit der Stoppelhöhe bei minimalem Verlust und/oder
Abstand der Zinkenenden (7a) von den Stoppelspitzen (8a) in Abhängigkeit der Stoppelhöhe bei maximaler Qualität, insbesondere minimaler Verschmutzung des Futters.

6. Landwirtschaftliches Bearbeitungsgerät nach mindestens einem der Ansprüche 1 bis 5, **dadurch gekennzeichnet, dass** das landwirtschaftliche Bearbeitungsgerät (1) ein Heuer, Schwader, Ladewagen mit Pick-up-Walze oder Ballenpresse mit Pick-up-Walze ist, wobei
Heuer und Schwader ein um eine Achse (A) rotierendes Rotorgehäuse (17) aufweisen, von dem die Zinken (7) angetrieben werden, wobei die Einrichtung (2) zum Verändern des Abstands der Zinkenenden (7a) zum Boden (20) die Position des Rotorgehäuses (17) entlang der Achse (A) verändern kann und vorzugsweise zusätzliche eine Kurvenbahn (19) innerhalb des Rotorgehäuses (17) veränderbar ist oder
die Zinken (7), die sich von der Pick-up-Walze nach außen erstrecken, um eine Achse (A) umlaufen, wobei die Einrichtung (2) zum Verändern des Abstands der Zinkenenden zum Boden (20) die Höhe der Achse (A) relativ zum Boden (20) ändert.

7. Landwirtschaftliches Bearbeitungsgerät nach mindestens einem der Ansprüche 1 bis 6, **dadurch gekennzeichnet, dass** die Sensoreinrichtung (3a, b) mindestens einen Abstandssensor aufweist, insbesondere derart, dass der Abstand zur Stoppelspitze (8a) und der Abstand zum Boden (20) gemessen werden kann und aus der Differenz die Stoppelhöhe (h) bestimmt werden kann.

8. Landwirtschaftliches Bearbeitungsgerät nach mindestens einem der Ansprüche 1 bis 7, **dadurch gekennzeichnet, dass** die Sensoreinrichtung (3a, b) zum Messen der Stoppelhöhe (h) mindestens einen Sensor folgender Gruppe umfassen kann: Ultraschallsensor, Radarsensor, Mikrowellensensor.

9. Verfahren zum Einstellen der Höhe der Zinkenenden (7a) eines landwirtschaftlichen Bearbeitungsgeräts (1), insbesondere nach mindestens einem der Ansprüche 1 bis 8, **gekennzeichnet durch** die folgenden Schritte:
- Messen der Stoppelhöhe (h),
- Leiten der Messwerte an eine Auswerteeinheit, in Form eines Entscheidungsunterstützungssystems (4), zum Ermitteln einer geeigneten Position der Zinkenenden (7a), insbesondere eines Abstands der Zinkenenden zum Boden bzw. zur Stoppelspitze in Abhängigkeit der gemessenen Stoppelhöhe,
- Einstellen der ermittelten Position der Zinkenenden.

10. Verfahren nach Anspruch 9, **dadurch gekennzeichnet, dass** das Messen der Stoppelhöhe und das Einstellen des Abstands kontinuierlich erfolgt.

11. Verfahren nach Anspruch 9 oder 10, **dadurch gekennzeichnet, dass** das Entscheidungsunterstützungssystem (4) in Abhängigkeit mehrerer Parameter den Abstand der Zinkenenden bestimmt, insbesondere auf der Grundlage der Feuchtigkeit und/oder des Stoppeltyps und/oder des Ertrags pro Fläche.

12. Verfahren nach mindestens einem der Ansprüche 9 bis 11, **dadurch gekennzeichnet, dass** das Entscheidungsunterstützungssystem (4) den Abstand der Zinkenenden (7a) zusätzlich auf der Grundlage von mindestens einer Betriebsstrategie bestimmt, die in dem Entscheidungsunterstützungssystem abgelegt ist, wobei insbesondere mindestens eine der folgenden Bearbeitungsstrategien herangezogen werden kann
Abstand der Zinkenenden (7a) von den Stoppelspitzen (8) eine Abhängigkeit der Stoppelhöhe bei maximaler Kapazität und/oder
Abstand der Zinkenenden von den Stoppelspitzen in Abhängigkeit der Stoppelhöhe bei minimalem Verlust und/oder
Abstand der Zinkenenden von den Stoppelspitzen in Abhängigkeit der Stoppelhöhe bei maximaler Qualität, insbesondere minimaler Verschmutzung des Futters.

13. Verfahren nach mindestens einem der Ansprüche 9 bis 12, **dadurch gekennzeichnet, dass**, wenn sich der Abstand der Zinkenenden (7a) während eines Umlaufs um die Achse (A) ändert, ein Abstand an einer bestimmten Stelle, insbesondere in einer Arbeitsposition der Zinken zugrunde gelegt wird.

14. Landwirtschaftliches Bearbeitungsgerät (1) nach mindestens einem der Ansprüche 1 bis 8, **dadurch gekennzeichnet, dass** weiter eine Berechnungseinrichtung (5) vorgesehen ist zum Berechnen der Stoppelhöhe aus dem Messwert oder den Messwerten der Sensoreinrichtung (3a, b).

15. Verfahren nach mindestens einem der Ansprüche 9-13, **dadurch gekennzeichnet, dass** die Zinkenenden derart in Abhängigkeit der Stoppelhöhe verstellt werden, dass der Abstand von der Stoppelspitze (8a) zur Zinkenspitze (7a) in einem Bereich von 10 -50%, insbesondere 15-30% der Stoppelhöhe liegt.

16. Verfahren nach mindestens einem der Ansprüche 9-13 oder 15, **dadurch gekennzeichnet, dass** die zur Ermittlung der Position der Zinkenspitzen herangezogenen Parameter, insbesondere die Messparameter, an ein mobiles Gerät, insbesondere ein Handy, Tablet übertragen werden, insbesondere via Bluetooth oder WLAN.

## Claims

1. Agricultural processing device (1) for use in forage harvesting, with tines (7) that revolve around an axis (A), with corresponding tine ends (7a),
a device (2) for altering the distance (a) of the tine ends (7a) from the ground (20),
**characterised by**
a sensor device (3a, 3b) for measuring stubble height (h),
an evaluation unit (4), in particular a decision support system (4), to which the sensor device (3a, b) supplies measurement signals for the stubble height, and which can determine a suitable position of the tine ends as a function of the measured stubble height, in particular the distance from the tine ends to the ground or to the stubble tip (8a), and
a control device (6) that drives the device (2) to alter the distance of the tine ends (7a), in order to adjust the determined position.

2. Agricultural processing device according to claim 1, **characterised in that** the decision support system (4) can determine the distance of the tine ends by means of an algorithm.

3. Agricultural processing device according to at least one of the claims 1 or 2, **characterised in that** the decision support system (4) can determine the distance of the tine ends as a function of several parameters, in particular moisture and/or stubble type and/or yield per unit of area.

4. Agricultural processing device according to at least one of the claims 1 to 3,
**characterised in that** the agricultural processing device (1) has at least one additional measuring device (9) for parameters, wherein the respective measuring device is connected to the decision support system (4) and/or additionally
an input device (10) is provided for inputting one or more parameters,
wherein the processing device (1) preferably has a device for measuring moisture, in particular the moisture of the stubble or air humidity in the area of the stubble.

5. Agricultural processing device (1) according to at least one of the claims 1 to 4,
**characterised in that** the decision support system (4) determines the distance of the tine ends additionally on the basis of at least one operating strategy that is stored in the decision support system (4), wherein in particular at least one of the following processing strategies can be applied:
distance of the tine ends (7a) from the stubble tips (8a) as a function of the stubble height at maximum capacity and/or
distance of the tine ends (7a) from the stubble tips (8a) as a function of the stubble height with minimal loss and/or
distance of the tine ends (7a) from the stubble tips (8a) as a function of the stubble height with maximum quality, in particular minimal contamination of the feed.

6. Agricultural processing device according to at least one of the claims 1 to 5,
**characterised in that** the agricultural processing device (1) is a haymaker, swather, loader wagon with pick-up roller or baler with pick-up roller, wherein
the haymaker and swather have a rotor housing (17) rotating around an axis (A), by which the tines (7) are driven, wherein the device (2) for altering the distance of the tine ends (7a) from the ground (20) can change the position of the rotor housing (17) along the axis (A), and preferably in addition a cam track (19) within the rotor housing (17) can be altered or
the tines (7), which extend outwards from the pick-up roller, revolve around an axis (A), wherein the device (2) for altering the distance from the tine ends to the ground (20) alters the height of the axis (A) relative to the ground (20).

7. Agricultural processing device according to at least one of the claims 1 to 6,
**characterised in that** the sensor device (3a, b) has at least one distance sensor, in particular such that the distance to the stubble tip (8a) and the distance to the ground (20) can be measured, and the stubble height (h) can be determined from the difference.

8. Agricultural processing device according to at least one of the claims 1 to 7,
**characterised in that** the sensor device (3a, b) for measuring the stubble height (h) can comprise at least one sensor from the following group: ultrasound sensor, radar sensor, microwave sensor.

9. Method for adjusting the height of the tine ends (7a) of an agricultural processing device (1), in particular according to at least one of the claims 1 to 8, **characterised by** the following steps:
- measurement of the stubble height (h),
- forwarding of the measured values to an evaluation unit, in particular in the form of a decision support system (4), to determine a suitable position of the tine ends (7a), in particular to determine a distance of the tine ends to the ground or to the stubble tip as a function of the measured stubble height,
- adjusting the determined position of the tine ends.

10. Method according to claim 9, **characterised in that** measurement of the stubble height and adjustment of the distance takes place continually.

11. Method according to claim 9 or 10, **characterised in that** the decision support system (4) determines the distance of the tine ends as a function of several parameters, in particular on the basis of the moisture and/or stubble type and/or yield per unit of area.

12. Method according to at least one of the claims 9 to 11, **characterised in that** the decision support system (4) determines the distance of the tine ends (7a) additionally on the basis of at least one operating strategy which is stored in the decision support system, wherein in particular at least one of the following processing strategies can be applied:
distance of the tine ends (7a) from the stubble tips (8) as a function of the stubble height at maximum capacity and/or
distance of the tine ends from the stubble tips as a function of the stubble height with minimal loss and/or
distance of the tine ends from the stubble tips as a function of the stubble height with maximum quality, in particular minimal contamination of the feed.

13. Method according to at least one of the claims 9 to 12, **characterised in that** if the distance of the tine ends (7a) changes during one revolution around the axis (A), a distance at a specific point, in particular in a working position of the tines, is taken as the basis.

14. Agricultural processing device (1) according to at least one of the claims 1 to 8, **characterised in that** furthermore a calculation device (5) is provided, to calculate the stubble height from the value or values measured by the sensor device (3a, b).

15. Method according to at least one of the claims 9-13, **characterised in that** the tine ends are adjusted depending on the stubble height, such that the distance from the stubble tip (8a) to the tine tip (7a) lies within a range of 10-50%, in particular 15-30%, of the stubble height.

16. Method according to at least one of the claims 9-13 or 15, **characterised in that** the parameters used to determine the position of the tine tips, in particular the measurement parameters, are transmitted to a mobile device, in particular a mobile phone, a tablet, in particular via Bluetooth or WLAN.

## Revendications

1. Outil de travail agricole (1) destiné à être utilisé pour la récolte de fourrage, comprenant des dents (7) tournant autour d'un axe (A) et ayant des extrémités de dents (7a) correspondantes,
un dispositif (2) pour modifier la distance (a) entre les extrémités des dents (7a) et le sol (20), **caractérisé par**
un dispositif de détection (3a, 3b) pour mesurer une hauteur de chaume (h),
une unité d'évaluation (4), sous la forme d'un système d'aide à la décision (4), à laquelle le dispositif de détection (3a, b) envoie des signaux de mesure pour la hauteur de chaume, et qui peut déterminer, en fonction de la hauteur de chaume mesurée, une position appropriée des extrémités de dents, en particulier la distance des extrémités de dents par rapport au sol ou à la pointe de chaume (8a), et
un dispositif de commande (6) qui commande le dispositif (2) pour modifier l'écartement des extrémités de dents (7a) afin d'ajuster la position déterminée.

2. Outil de travail agricole selon la revendication 1, **caractérisé en ce que** le système d'aide à la décision (4) peut déterminer la distance entre les extrémités des dents au moyen d'un algorithme.

3. Outil de travail agricole selon au moins l'une des revendications 1 ou 2, **caractérisé en ce que** le système d'aide à la décision (4) est apte à déterminer l'écartement des extrémités des dents en fonction de plusieurs paramètres, notamment l'humidité et/ou le type de chaume et/ou le rendement par unité de surface.

4. Outil de travail agricole selon au moins l'une des revendications 1 à 3, **caractérisé en ce que** l'outil de travail agricole (1) présente au moins un dispositif de mesure supplémentaire (9) pour des paramètres, le dispositif de mesure respectif étant relié au système d'aide à la décision (4) et/ou un dispositif d'entrée (10) étant en outre prévu pour entrer un ou plusieurs paramètres, l'outil de travail (1) présentant de préférence un dispositif pour mesurer l'humidité, en particulier l'humidité des chaumes ou l'humidité de l'air dans la zone des chaumes.

5. Outil de travail agricole (1) selon au moins l'une des revendications 1 à 4, **caractérisé en ce que** le système d'aide à la décision (4) détermine en outre la distance entre les extrémités des dents sur la base d'au moins une stratégie de fonctionnement qui est enregistrée dans le système d'aide à la décision (4), au moins l'une des stratégies de travail suivantes pouvant notamment être utilisée :
distance des extrémités des dents (7a) par rapport aux pointes des chaumes (8a) en fonction de la hauteur des chaumes à la capacité maximale et/ou
distance des extrémités des dents (7a) par rapport aux pointes des chaumes (8a) en fonction de la hauteur des chaumes avec perte minimale et/ou
distance entre les extrémités des dents (7a) et les pointes des chaumes (8a) en fonction de la hauteur des chaumes à une qualité maximale, notamment un souillage minimal du fourrage.

6. Outil de travail agricole selon au moins l'une des revendications 1 à 5, **caractérisé en ce que** l'outil de travail agricole (1) est une faneuse, une andaineuse, une remorque autochargeuse avec un rouleau de ramassage ou une presse à balles avec un rouleau de ramassage, dans lequel
la faneuse et l'andaineuse présentent un boîtier de rotor (17) tournant autour d'un axe (A), par lequel les dents (7) sont entraînées, le dispositif (2) pour modifier la distance des extrémités des dents (7a) par rapport au sol (20) pouvant modifier la position du boîtier de rotor (17) le long de l'axe (A) et de préférence une trajectoire incurvée (19) supplémentaire pouvant être modifiée à l'intérieur du boîtier de rotor (17) ou
les dents (7) qui s'étendent vers l'extérieur depuis le rouleau de ramassage tournent autour d'un axe (A), le dispositif (2) pour modifier la distance entre les extrémités des dents et le sol (20) modifiant la hauteur de l'axe (A) par rapport au sol (20).

7. Outil de travail agricole selon au moins l'une des revendications 1 à 6, **caractérisé en ce que** le dispositif de détection (3a, b) comporte au moins un capteur de distance, notamment de telle sorte que la distance à la pointe de chaume (8a) et la distance au sol (20) peuvent être mesurées et que la hauteur de chaume (h) peut être déterminée à partir de la différence.

8. Outil de travail agricole selon au moins l'une des revendications 1 à 7, **caractérisé en ce que** le dispositif de détection (3a, b) pour mesurer la hauteur de chaume (h) peut comprendre au moins un capteur du groupe suivant : capteur à ultrasons, capteur radar, capteur à micro-ondes.

9. Procédé de réglage de la hauteur des extrémités de dents (7a) d'un outil de travail agricole (1), notamment selon au moins l'une des revendications 1 à 8, **caractérisé par** les étapes suivantes:
- mesure de la hauteur de chaume (h),
- transmission des valeurs mesurées vers une unité d'évaluation, sous la forme d'un système d'aide à la décision (4), pour déterminer une position appropriée des extrémités des dents (7a), en particulier une distance entre les extrémités des dents et le sol ou la pointe de chaume en fonction de la hauteur de chaume mesurée,
- réglage de la position déterminée des extrémités des dents.

10. Procédé selon la revendication 9, **caractérisé en ce que** la mesure de la hauteur de chaume et le réglage de l'écartement sont effectués en continu.

11. Procédé selon la revendication 9 ou 10, **caractérisé en ce que** le système d'aide à la décision (4) détermine, en fonction de plusieurs paramètres, la distance entre les extrémités des dents, notamment sur la base de l'humidité et/ou du type de chaume et/ou du rendement par surface.

12. Procédé selon au moins l'une des revendications 9 à 11, **caractérisé en ce que** le système d'aide à la décision (4) détermine en outre la distance des extrémités de dents (7a) sur la base d'au moins une stratégie opérationnelle qui est enregistrée dans le système d'aide à la décision, au moins l'une des stratégies de traitement suivantes pouvant notamment être utilisée
distance des extrémités des dents (7a) par rapport aux pointes des chaumes (8) qui dépend de la hauteur des chaumes à la capacité maximale et/ou
distance entre les extrémités des dents et les pointes des chaumes en fonction de la hauteur des chaumes avec une perte minimale et/ou
distance entre les extrémités des dents et les pointes des chaumes en fonction de la hauteur des chaumes pour une qualité maximale, notamment un souillage minimal du fourrage.

13. Procédé selon au moins l'une des revendications 9 à 12, **caractérisé en ce que**, lorsque l'écartement des extrémités des dents (7a) varie pendant une rotation autour de l'axe (A), un écartement à un endroit déterminé est pris comme base, en particulier dans une position de travail des dents.

14. Outil de travail agricole (1) selon au moins l'une des revendications 1 à 8, **caractérisé en ce qu'**il est prévu en outre un dispositif de calcul (5) pour calculer la hauteur de chaume à partir de la valeur ou des valeurs mesurées du dispositif de détection (3a, b).

15. Procédé selon au moins l'une des revendications 9 à 13, **caractérisé en ce que** les extrémités des dents sont réglées en fonction de la hauteur de chaume de telle sorte que la distance entre la pointe de chaume (8a) et la pointe de dent (7a) se situe dans une plage de 10 à 50 %, notamment de 15 à 30 % de la hauteur de chaume.

16. Procédé selon au moins l'une des revendications 9 à 13 ou 15, **caractérisé en ce que** les paramètres utilisés pour déterminer la position des pointes de dents, notamment les paramètres de mesure, sont transmis à un appareil mobile, notamment un téléphone mobile, une tablette, notamment via Bluetooth ou WLAN.
